# EUROPÄISCHE PATENTSCHRIFT

(11) **EP 2 261 070 B1**
(45) Veröffentlichungstag und Bekanntmachung des Hinweises auf die Patenterteilung: **05.12.2012**
(21) Anmeldenummer: 10162625.7
(22) Anmeldetag: 12.05.2010
(51) Int. Cl.: B60K 11/04, B60K 11/08, B62D 35/02

(54) **Kühlluftführung zu wenigstens einem Bauteil, das von einem Motor eines Kraftfahrzeugs erwärmt ist**
Cool air guide to at least one component warmed by one engine of a motor vehicle
Guidage d'air de refroidissement vers au moins un composant chauffé par un moteur de véhicule automobile

(30) Priorität: 30.05.2009 DE 102009023531
(43) Veröffentlichungstag der Anmeldung: 15.12.2010
(73) Patentinhaber: Bayerische Motoren Werke Aktiengesellschaft, 80809 München (DE)
(72) Erfinder: Willmerdinger, Thomas, 71364 Winnenden (DE); Keller, Andreas, 85777 Fahrenzhausen (DE)

(56) Entgegenhaltungen:
- EP-A1- 0 391 391
- EP-A1- 1 514 772
- DE-A1- 19 904 515
- DE-A1-102006 026 098
- US-A- 2 194 394

## Beschreibung

Die Erfindung betrifft eine Kühlluftführung zu wenigstens einem Bauteil, das von einem Motor eines Kraftfahrzeugs zumindest nach einiger Zeit erwärmt ist, mit den im Oberbegriff des Patentanspruches 1 angegebenen Merkmalen.

Eine derartige Kühlluftführung weist in der DE 37 04 145 A1 unterhalb einem an der Vorderseite des Kraftfahrzeugs vor einem Kühler vorgesehenen Kühllufteinlass einen Frontspoiler und dahinter eine untere Motorraumabdeckung auf. Im vorderen Bereich der Motorraumabdeckung sind Einlassschlitze ausgebildet, die von schrägen, nach hinten oben gerichteten Wänden begrenzt sind, die Luftleitelemente bilden. Durch die Einlassschlitze kann eine Unterbodenströmung des Fahrtwindes in den Motorraum gelangen, die lediglich über eine kurze Strecke von den schrägen Wänden im Bereich der Einlassschlitze geführt ist. Im Innenbereich des Motorraumes dürfe der Luftstrom unvorhersehbar verwirbeln und von den im Motorraum angeordneten Bauteilen, insbesondere dem Motor des Kraftfahrzeugs erwärmt werden. An einer Stelle, an der wenigstens ein Auspuffrohr aus dem Motorraum heraus geführt ist, kann der erwärmte Luftstrom nach außen strömen und die in der Regel im Bereich des Motors heißen Auspuffrohre abkühlen. Dadurch wird der Luftstrom weiter aufgeheizt, der dahinter eventuell temperaturempfindliche Bauteile wie eine schwingungsdämpfende Gelenkscheibe oder ein elektrisches und/oder elektronisches Steuergerät eines mit dem Motor verbundenen Getriebes oder Verteilergetriebes erwärmt. Diese Bauteile können dadurch derart belastet oder beschädigt werden, dass sie eine geringere Haltbarkeit aufweisen und vorzeitig - eventuell im Fahrbetrieb - ausfallen.

Der Erfindung liegt die Aufgabe zu Grunde, eine Kühlluftführung mit den Merkmalen im Oberbegriff des Patentanspruches 1 anzugeben, die wenigstens ein von einem Motor des Kraftfahrzeugs zumindest nach einiger Zeit erwärmtes Bauteil mit einfachen Mitteln im Fahrbetrieb effektiv zu kühlen.

Diese Aufgabe ist durch die Merkmale im Patentanspruch 1 gelöst. Vorteilhafte Ausgestaltungen der Erfindung sind den Unteransprüchen entnehmbar.

Die erfindungsgemäße Kühlluftführung zu wenigstens einem Bauteil, das von einem Motor eines Kraftfahrzeugs zumindest nach einiger Zeit erwärmt ist, weist eine untere Motorabdeckung auf, die eine Bodenwand des Kraftfahrzeugs bildet. Ein von einer Unterbodenströmung des Fahrtwindes zumindest bereichsweise angeströmtes Luftleitelement lenkt zumindest einen Teil der Unterbodenströmung zu dem erwärmten Bauteil um. Das Luftleitelement ist im hinteren unteren, von der Motorabdeckung nicht abgedeckten Außenbereich des Motors oder etwas dahinter angeordnet und weist einen oberen Bereich auf, der schräg nach oben und in Fahrtrichtung nach vorne geneigt ist. Das zumindest nach einiger Zeit von dem Motor erwärmte Bauteil ist über und/oder in Fahrtrichtung vor dem oberen Bereich der Windleittläche des Luftleitelements angeordnet. Das Luftleitelement lenkt somit einen Teil der gegenüber der Umgebung nicht oder kaum erwärmten Unterbodenströmung mit einem Winkel von über 90 Grad etwa in Richtung des Bauteiles um. Die umgelenkte Luftströmung wird dadurch erheblich verwirbelt und zu dem erwärmten Bauteil geleitet. Der von dem Luftleitelement verwirbelte Luftstrom kann die von dem erwärmten Bauteil aufgenommene Wärme rascher ableiten, wodurch das Bauteil mit einfachen Mitteln intensiv auch dann gekühlt wird, wenn der Motor ein leistungsstarker Verbrennungsmotor des Kraftfahrzeugs ist, der sich im Fahrbetrieb sehr erwärmt.

Ein Ausführungsbeispiel der Erfindung wird anhand einer Zeichnung näher erläutert. Es zeigen
- Fig. 1: einen vereinfachten vertikalen Fahrzeuglängsschnitt durch die Kühlluft- führung zu wenigstens einem Bauteil, das von dem Motor eines Kraftfahr- zeugs zumindest nach einiger Zeit erwärmt ist,
- Fig. 2: eine Fig. 1 entsprechende Ansicht eines gegenüber Fig. 1 seitlich ver- setzten vertikalen Fahrzeuglängsschnittes,
- Fig. 3: eine vereinfachte Ansicht der Kühlluftführung von unten und
- Fig. 4: eine vereinfachte Ansicht auf die Kühlluftführung von hinten.

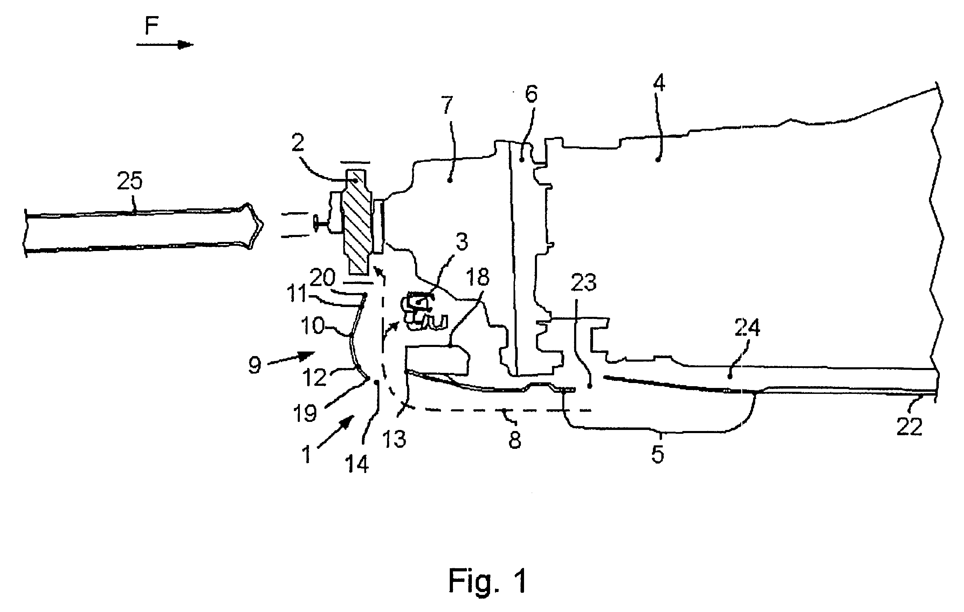

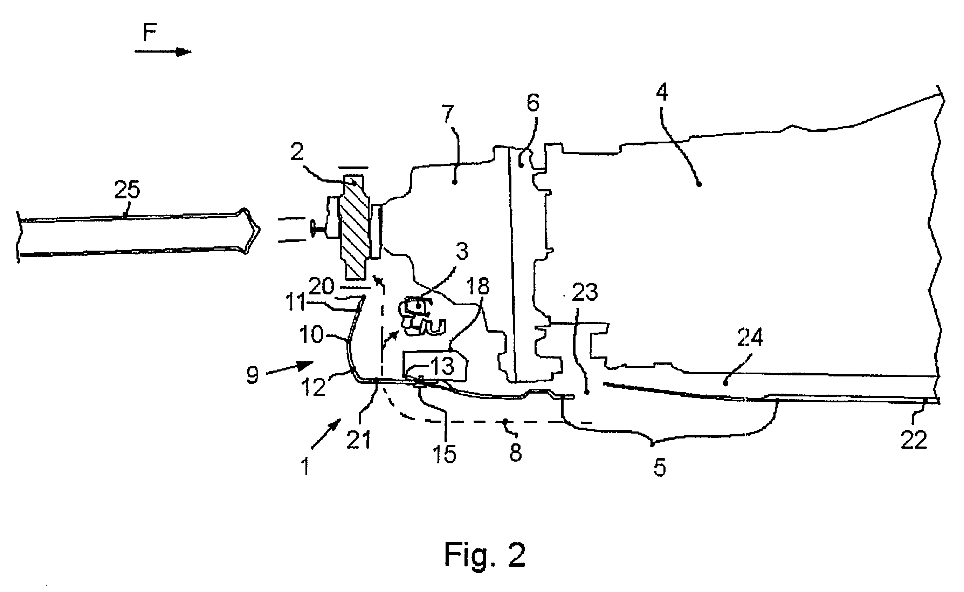

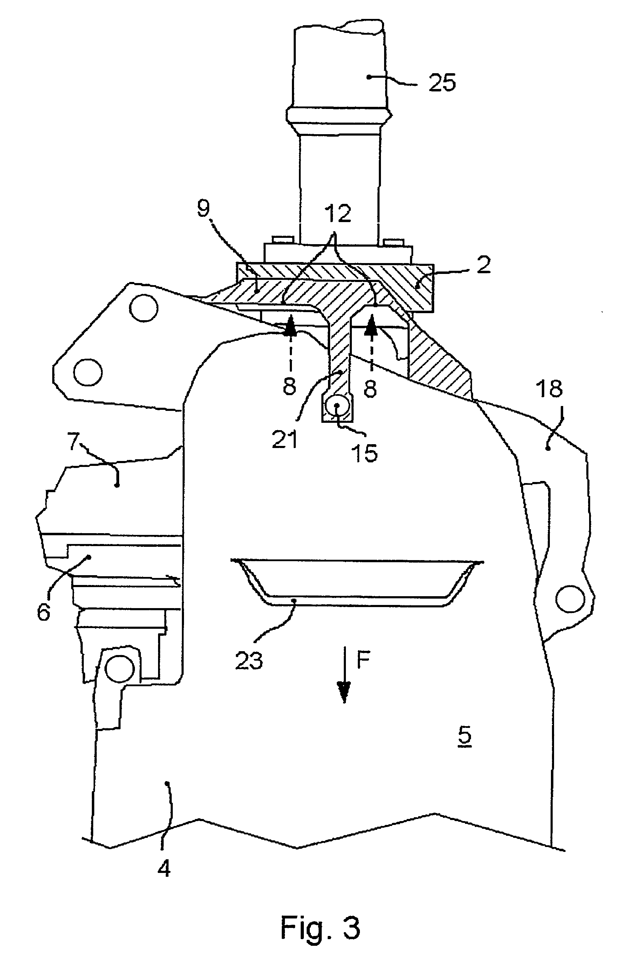

In Figur 1 ist eine Kühlluftführung 1 zu einer vorderen, schwingungsdämpfenden Gelenkscheibe 2 und zu einem elektrischen und/oder elektronischen Bauteil 3 in einem vereinfachten vertikalen Fahrzeuglängsschnitt dargestellt, wobei die Gelenkscheibe 2 und das elektrische und/oder elektronische Bauteil 3 zumindest nach einiger Zeit im Fahrbetrieb des Kraftfahrzeugs von dem unter einer Fronthaube angeordneten Motor 4 erwärmt sind. Das elektrische und/oder elektronische Bauteil 3 ist beispielsweise zur Steuerung eines mit dem Motor 4 verbundenen Getriebes 6 oder Verteilergetriebes 7 verwendet. Die normale Fahrtrichtung des Kraftfahrzeugs ist in den Figuren 1 bis 3 mit einem Pfeil F angegeben.

Die schwingungsdämpfende Gelenkscheibe 2 ist an einer von dem Motor 4 drehbaren Gelenkwelle 25 angeordnet und enthält beispielsweise eine Gummimischung, die vor einer übermäßigen Erwärmung zu schützen ist. Hierzu weist die Kühlluftführung 1 ein von einer Unterbodenströmung 8 des Fahrtwindes zumindest bereichsweise angeströmtes Luftleitelement 9 auf, das im Fahrbetrieb des Kraftfahrzeugs zumindest einen Teil der durch den Fahrtwind bewirkten Unterbodenströmung 8 zu der Gelenkscheibe 2 und zu dem ebenfalls temperaturempfindlichen elektrischen und/oder elektronischen Bauteil 3 lenkt und dadurch zumindest die Gelenkscheibe 2 und das elektrische und/oder elektronische Bauteil 3 entsprechend kühlt. Die elektrische und/oder elektronische Baueinheit 3 ist beispielsweise zur Steuerung des mit dem Motor 4 verbundenen Getriebes 6 und/oder Verteilergetriebes 7 vorgesehen.

Die Kühlluftführung 1 weist eine untere Motorabdeckung 5 auf, die unter dem Motor 4 sowie unter einem beispielsweise hinten mit dem Motor 4 verbundenen Getriebe 6 und einem dahinter an dem Getriebe 6 angeflanschten Verteilergetriebe 7 eine Bodenwand des Kraftfahrzeugs 1 bildet.

Das Luftleitelement 9 ist im hinteren unteren, von der unteren Motorabdeckung 5 nicht abgedeckten Außenbereich des Motors 4 oder etwas dahinter angeordnet und weist eine Windleitfläche 10 mit einem oberen Bereich 11 auf, der schräg nach oben und in Fahrtrichtung nach vorne geneigt ist. Die Gelenkscheibe 2 ist im Wesentlichen mit einem geringen Abstand über dem oberen Bereich 11 der Windleitfläche 10 des Luftleitelements 9 angeordnet. Das elektrische und/oder elektronische Bauteil 3 ist im Wesentlichen mit einem Abstand in Fahrtrichtung F vor dem oberen Bereich 11 der Windleitfläche 10 des Luftleitelements 9 angeordnet.

Das Luftleitelement 9 ist ein separates Bauteil, das derart im Wesentlichen hinter der unteren Motorabdeckung 5 angeordnet ist, dass zwischen wenigstens einem unteren Bereich 12 der Windleitfläche 10 des Windleitelements 9 und einem hinteren Randbereich 13 der unteren Motorabdeckung 5 ein Spalt 14 gebildet ist. Durch den Spalt 14 kann wenigstens ein Teil der Unterbodenströmung 8 zu der Windleitfläche 10 des Luftleitelements 9 strömen, wobei das Luftleitelement 9 den Kühlluftstrom zu der vorderen Gelenkscheibe 2 und zu dem elektrischen und/oder elektronischen Bauteil 3 umlenkt, die dadurch von dem Luftstrom entsprechend gekühlt werden.

Das Luftleitelement 9 ist bei dem Ausführungsbeispiel an drei Stellen 15, 16, 17, unten und jeweils in einem Seitenbereich direkt oder mittelbar an einem Querträger 18 befestigt, an dem der Motor 4 und/oder das Getriebe 6 des Motors 4 und/oder das Verteilergetriebe 7 sowie die Motorabdeckung 5 und das Luftleitelement 9 direkt oder mittelbar befestigt bzw. abgestützt sind.

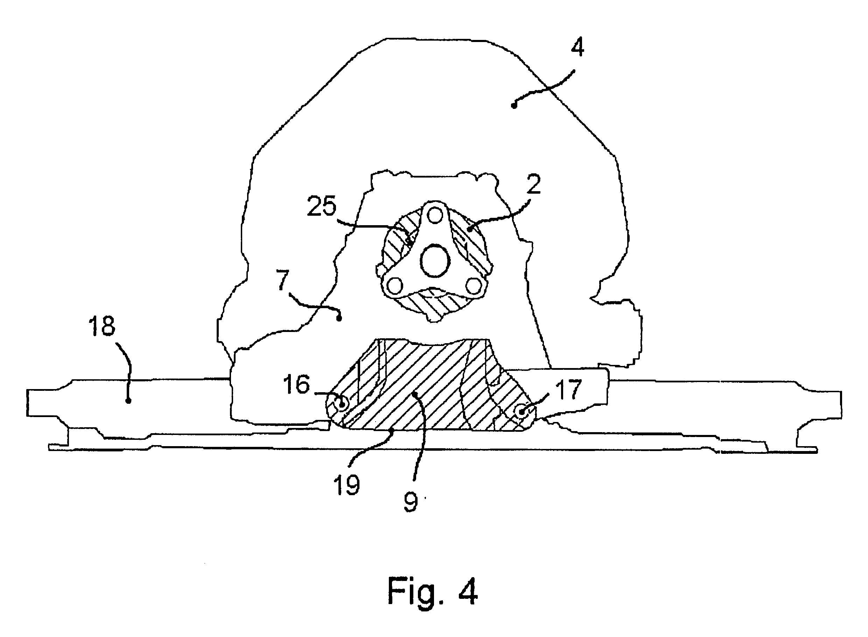

Etwa von dem unteren, seitlich mittleren Bereich 12 des Luftleitelements 9 steht eine Befestigungslasche 21 in Fahrtrichtung F nach vorne ab, die direkt oder mittelbar an der Stelle 15 an dem Querträger 18 befestigt ist. Die beiden anderen Befestigungsstellen 16, 17 des Luftleitelements 9 sind in Fig. 4 erkennbar, an denen das Luftleitelement 9 jeweils in einem Seitenbereich direkt oder mittelbar beispielsweise mittels Schrauben lösbar an dem Querträger 18 befestigt ist.

Die Windieitfläche 10 des Luftleitelements 9 weist einen in Höhenrichtung mittleren Bereich aufweist, der zumindest bereichsweise nach vorne konkav gekrümmt ist. Bei dem Ausführungsbeispiel erstreckt sich die Windleitfläche 10 des Luftleitelements 9 etwa über die Höhe des Luftleitelements 9. Der untere Randbereich 19 und der obere Randbereich 20 jeweils der Windleitfläche 10 des Luftleitelements 9 sind etwa übereinander angeordnet. Den in Höhenrichtung untersten Bereich des Luftleitelements 9 bildet der untere Randbereich 19 der Windleitfläche 10 des Luftleitelements 9, der über der tiefsten Stelle 22 der Motorabdeckung 5 und/oder einer tiefsten Bodenfläche der Karosserie des Kraftfahrzeugs 1 angeordnet ist.

Bei dem Ausführungsbeispiel ist im hinteren Bereich der unteren Motorabdeckung 5 eine Luftdurchtrittsöffnung 23 gebildet, durch die ein Teil der Unterbodenströmung 8 in einem vorgegebenen Abstand vor dem Spalt 14 in den Motorraum 24 einströmen und den Motor 4 und/oder das Getriebe 6 und/oder das Verteilergetriebe 7 und/oder wenigstens einen gegenüber der Unterbodenströmung wärmeren Körper kühlen kann.

Die Erfindung kann von dem Ausführungsbeispiel abweichend ausgeführt werden: Das im hinteren unteren, von der Motorabdeckung nicht abgedeckten Außenbereich des Motors oder etwas dahinter angeordnete Luftleitelement weist einen oberen Bereich auf, der schräg nach oben und in Fahrtrichtung nach vorne geneigt ist. Das wenigstens eine erwärmte Bauteil ist im Wesentlichen über und/oder in Fahrtrichtung vor dem oberen Bereich der Windleitfläche des Luftleitelements angeordnet. Das Luftleitelement kann durch ein separates Bauteil gebildet oder mit einem beliebigen Bauteil verbunden sein. Eine Befestigung des Luftleitelements kann in beliebiger Weise erfolgen. Die Form des Luftleitelements ist insbesondere im mittleren und/oder unteren Bereich vorgebbar. Es ist nicht in jedem Fall erforderlich, dass sich die Windleitfläche des Luftleitelements weitgehend über die Höhe des Luftleitelements erstreckt. Das Luftleitelement kann ein separates Bauteil sein oder mit einem beliebigen Bauteil verbunden sein. Eine Befestigung des Luftleitelements kann in beliebiger Weise erfolgen. Die Form des Luftleitelements ist insbesondere im mittleren und/oder unteren Bereich vorgebbar. Es ist nicht in jedem Fall erforderlich, dass sich die Windleitfläche des Luftleitelements weitgehend über die Höhe des Luftleitelements erstreckt. Das von dem Motor erwärmte Bauteil, das zu kühlen ist, kann in einer vogebbaren Position so angeordnet sein, dass das Windleitelement einen kühlenden, von der Unterbodenströmung des Kraftfahrzeugs abgezweigten Luftstrom auf das Bauteil oder zumindest in die Nähe des Bauteiles lenken kann. Die erfindungsgemäße untere Motorabdeckung ist eine untere Bodenverkleidung, die zumindest bereichsweise den Motor des Kraftfahrzeugs und/oder ein mit dem Motor verbundenes Getriebe und/oder ein mit dem Motor und/oder dem Getriebe verbundenes Verteilergetriebe von unten abdeckt.

## Patentansprüche

1. Kühlluftführung (1) zu wenigstens einem Bauteil, das von einem Motor eines Kraftfahrzeugs zumindest nach einiger Zeit erwärmt ist, mit einer unteren Motorabdeckung (3), die eine Bodenwand des Kraftfahrzeugs bildet, mit einem von einer Unterbodenströmung des Fahrtwindes zumindest bereichsweise angeströmten Luftleitelement (9), das zumindest einen Teil der Unterbodenströmung zu dem erwärmten Bauteil lenkt, **dadurch gekennzeichnet, dass** das Luftleitelement (9) im hinteren unteren, von der Motorabdeckung (5) nicht abgedeckten Außenbereich des Motors (4) oder etwas dahinter angeordnet ist und einen oberen Bereich (11) aufweist, der schräg nach oben und in Fahrtrichtung (F) nach vorne geneigt ist, und sich das erwärmte Bauteil (2, 3) im Wesentlichen über und/oder in Fahrtrichtung vor dem oberen Bereich (11) der Windleitfläche (10) des Luftleitelements (9) befindet.

2. Kühlluftführung nach Anspruch 1, **dadurch gekennzeichnet, dass** das Luftleitelement (9) ein separates Bauteil ist, das im Wesentlichen hinter der Motorabdeckung (5) angeodnet ist.

3. Kühlluftführung nach Anspruch 1 oder 2, **dadurch gekennzeichnet, dass** das Luftleitelement (9) an wenigstens einer Stelle (15, 16, 17) direkt oder mittelbar an einem Querträger (18) befestigt ist, an dem der Motor (4) oder ein Getriebe (6) des Motors (4) und/oder die Motorabdeckung (5) direkt oder mittelbar befestigt bzw. abgestützt ist bzw. sind.

4. Kühlluftführung nach einem der Ansprüche 1 bis 3, **dadurch gekennzeichnet, dass** die Windleitfläche (10) des Luftleitelements (9) einen in Höhenrichtung mittleren Bereich aufweist, der zumindest bereichsweise nach vorne konkav gekrümmt ist.

5. Kühlluftführung nach einem der Ansprüche 1 bis 4, **dadurch gekennzeichnet, dass** sich die Windleitfläche (10) des Luftleitelements (9) etwa über die Höhe des Luftleitelements (9) erstreckt.

6. Kühlluftführung nach einem der Ansprüche 1 bis 5, **dadurch gekennzeichnet, dass** der untere Randbereich (19) und der obere Randbereich (20) jeweils der Windleitfläche (10) des Luftleitelements (9) etwa übereinander angeordnet sind.

7. Kühlluftführung nach einem der Ansprüche 1 bis 6, **dadurch gekennzeichnet, dass** der in Höhenrichtung unterste Bereich (19) des Luftleitelements (9) über der tiefsten Stelle (22) der Motorabdeckung (5) und/oder einer Bodenfläche der Karosserie des Kraftfahrzeugs angeordnet ist.

8. Kühlluftführung nach einem der Ansprüche 1 bis 7, **dadurch gekennzeichnet, dass** von einem unteren Bereich des Luftleitelements (9) eine Befestigungslasche (21) nach vorne absteht, die direkt oder mittelbar an einer Bodenwand der Karosserie des Kraftfahrzeugs bzw. der Motorabdeckung oder gegebenenfalls an dem Querträger (18) befestigt ist.

9. Kühlluftführung nach einem der Ansprüche 1 bis 8, **dadurch gekennzeichnet, dass** das Luftleitelement (9) direkt oder mittelbar an wenigstens einem in Fahrzeugquerrichtung seitlichen Bereich (16,17) an einer Wand der Karosserie des Kraftfahrzeugs und/oder an dem Querträger (18) befestigt ist.

10. Kühlluftführung nach einem der Ansprüche 1 bis 9, **dadurch gekennzeichnet, dass** wenigstens ein von dem Motor (4) erwärmtes und über das Luftleitelement (9) von einem Teil der Unterbodenströmung gekühltes Bauteil (2, 3) eine schwingungsdämpfende Gelenkscheibe (2) an einer von dem Motor (4) drehbaren Gelenkwelle (25) und/oder eine elektrische und/oder elektronische Baueinheit (3) beispielsweise zur Steuerung eines mit dem Motor (4) verbundenen Getriebes (6) und/oder Verteilergetriebes (7) ist.

11. Kühlluftführung nach Anspruch 10, **dadurch gekennzeichnet, dass** die Gelenkscheibe (2) etwa über der Windleitfläche (10) des Luftleitelements (9) und/oder die elektrische bzw. elektronische Baueinheit (3) zumindest bereichsweise mit einem Abstand vor der Windleitfläche (10) des Luftleitelements (9) angeordnet ist bzw. sind.

## Claims

1. A cooling-air duct (1) to at least one component heated by an engine of a motor vehicle at least after a time, comprising a bottom engine covering (5) constituting a floor wall of the motor vehicle, also comprising an air pipe element (9) at least parts of which convey an under-floor flow of head wind and direct at least a part of the under-floor flow to the heated component, **characterised in that** the air pipe element (9) is disposed in or somewhat behind the lower rear outer region of the engine (4) not covered by the covering (5) and has an upper region (11) inclined upwards and forwards in the direction of travel (F) and the heated component (2, 3) is substantially over and/or in front (in the direction of travel) of the top region (11) of the surface (10) of the air pipe element (9).

2. A cooling-air duct according to claim 1, **characterised in that** the air pipe element (9) is a separate component disposed substantially behind the engine covering (5).

3. A cooling-air duct according to claim 1 or claim 2, **characterised in that** the air pipe element (9) is directly or indirectly fastened at at least one place (15, 16, 17) to a cross-member (18) at which the engine (4) or a gear unit (6) of the engine (4) and/or the engine covering (5) is directly or indirectly fastened or braced.

4. A cooling-air duct according to any of claims 1 to 3, **characterised in that** the surface (10) of the air pipe element (9) has a vertically central region, at least part of which is bent forward in a concave curve.

5. A cooling-air duct according to any of claims 1 to 4, **characterised in that** the surface (10) of the air pipe element (9) extends approximately over the height of the air pipe element (9).

6. A cooling-air duct according to any of claims 1 to 5, **characterised in that** the bottom edge region (19) and the top edge region (20) of the surface (10) of the air pipe element (9) are disposed approximately one above the other.

7. A cooling-air duct according to any of claims 1 to 6, **characterised in that** the vertically lowest region (19) of the air pipe element (9) is disposed above the lowest part (22) of the engine covering (5) and/or of a floor surface of the vehicle body.

8. A cooling-air duct according to any of claims 1 to 7, **characterised in that** a fastening lug (21) projects forwards from a bottom region of the air pipe element (9) and is directly or indirectly fastened to a floor wall of the vehicle body or to the engine covering or if required to the cross-member (18).

9. A cooling-air duct according to any of claims 1 to 8, **characterised in that** the air pipe element (9) is directly or indirectly fastened at at least one side region (16, 17) in the transverse direction of the vehicle to a wall of the vehicle body and/or to the cross-member (18).

10. A cooling-air duct according to any of claims 1 to 9, **characterised in that** at least one component (2, 3) heated by the engine (4) and cooled by a part of the under-floor flow through the air pipe element (9) is a vibration-damping flexible disc (2) on a propeller shaft (25) rotatable by the engine (4) and/or is an electric and/or electronic structural unit (3) e.g. for actuating a gear unit (6) and/or power divider (7) connected to the engine (4).

11. A cooling-air duct according to claim 10, **characterised in that** the flexible disc is disposed approximately above the surface (10) of the air pipe element (9) and/or the electric or electronic component (3) is at least partly disposed at a distance in front of the surface (10) of the air pipe element (9).

## Revendications

1. Dispositif de guidage de l'air de refroidissement (1) vers au moins un composant chauffé au moins après un certain temps par le moteur du véhicule automobile, comprenant
- un habillage inférieur (5) du moteur qui constitue le fond du véhicule,
- un élément de guidage d'air (9) attaqué au moins par zone par le vent de circulation passant sous le plancher, cet élément de guidage d'air dirigeant au moins une partie de la veine d'air sous le plancher vers le composant chauffé,
dispositif de guidage d'air de refroidissement
**caractérisé en ce que**
l'élément de guidage d'air (9) est installé dans la zone extérieure inférieure arrière du moteur (4) non couverte par l'habillage de moteur (5) ou sensiblement derrière cette zone et il comporte une zone supérieure (11) inclinée vers le haut et vers l'avant dans le sens de circulation (F) et le composant chauffé (2, 3) se trouve pratiquement au-dessus et/ou devant la zone supérieure (11) de la surface de guidage d'air (10) de l'élément de guidage d'air (9) dans la direction de circulation.

2. Dispositif de guidage de l'air de refroidissement, selon la revendication 1
**caractérisé en ce que**
l'élément de guidage d'air (9) est un composant distinct installé pratiquement derrière l'habillage de moteur (5).

3. Dispositif de guidage de l'air de refroidissement, selon la revendication 1 ou 2,
**caractérisé en ce que**
l'élément de guidage d'air (9) est fixé en au moins un endroit (15, 16, 17) directement ou indirectement à une traverse (18) à laquelle sont fixés ou sur laquelle s'appuient directement ou indirectement le moteur (4) ou la transmission (6) du moteur (4) et/ou le capot (5) du moteur.

4. Dispositif de guidage de l'air de refroidissement, selon l'une des revendications 1 à 3,
**caractérisé en ce que**
la surface de guidage d'air (10) de l'élément de guidage d'air (9) présente une zone médiane dans le sens de la hauteur qui est au moins par endroit cintrée selon une forme concave tournée vers l'avant.

5. Dispositif de guidage de l'air de refroidissement, selon l'une des revendications 1 à 4,
**caractérisé en ce que**
la surface de guidage d'air (10) de l'élément de guidage d'air (9) s'étend sensiblement sur la hauteur de l'élément de guidage d'air (9).

6. Dispositif de guidage de l'air de refroidissement, selon l'une des revendications 1 à 5,
**caractérisé en ce que**
la zone inférieure (19) du bord et la zone supérieure (20) du bord de la surface de guidage d'air (10) de l'élément de guidage d'air (9) sont sensiblement l'une au-dessus de l'autre.

7. Dispositif de guidage de l'air de refroidissement, selon l'une des revendications 1 à 6,
**caractérisé en ce que**
la zone inférieure (19) de l'élément de guidage d'air (9) dans le sens de la hauteur est au-dessus du point le plus bas (22) de l'habillage (5) du moteur et/ou de la surface du plancher de la carrosserie du véhicule.

8. Dispositif de guidage de l'air de refroidissement, selon l'une des revendications 1 à 7,
**caractérisé en ce que**
une patte de fixation (21) est en saillie vers l'avant à partir de la zone inférieure de l'élément de guidage d'air (9), cette patte étant fixée directement ou indirectement à la paroi du plancher de la carrosserie du véhicule ou à l'habillage du moteur ou, le cas échéant, à la traverse (18).

9. Dispositif de guidage de l'air de refroidissement, selon l'une des revendications 1 à 8,
**caractérisé en ce que**
l'élément de guidage d'air (9) est fixé directement ou indirectement à au moins une zone latérale (16, 17) dans la direction transversale du véhicule à la paroi de la carrosserie du véhicule et/ou à la traverse (18).

10. Dispositif de guidage de l'air de refroidissement, selon l'une des revendications 1 à 9,
**caractérisé en ce qu'**
au moins un composant (2, 3) chauffé par le moteur (4) est refroidi par l'élément de guidage d'air (9) par une partie de la veine passant sous le plancher, et un joint universel à disques (2) amortissant les vibrations de l'arbre à cardan (25) entraîné en rotation par le moteur (4) et/ou une unité de composants électriques et/ou électroniques (3) par exemple pour commander la transmission (6) reliée au moteur (4) et/ou la boîte de transfert (7).

11. Dispositif de guidage de l'air de refroidissement, selon l'une des revendications 1 à 4,
**caractérisé en ce que**
le joint universel à disques (2) est installé sensiblement au-dessus de la surface de guidage d'air (10) de l'élément de guidage (9) et/ou le composant électrique ou électronique (3) est installé au moins par zone à distance devant la surface de guidage d'air (10) de l'élément de guidage d'air (9).
